# EUROPEAN PATENT APPLICATION

(11) **EP 4 746 450 A1**
(43) Date of publication of application: **20.05.2026**
(21) Application number: 24213910.3
(22) Date of filing: 19.11.2024
(51) Int. Cl.: H04R 25/00

(54) **HEARING DEVICE PAIRING AND RELATED METHODS**

(71) Applicant: GN Hearing A/S, 2750 Ballerup (DK)
(72) Inventor: PEDERSEN, Brian Dam, Ballerup (DK); PEDERSEN, Thorkild Find, Ballerup (DK)
(74) Representative: Aera A/S

(57) **Abstract**

A hearing device and related method is provided, the hearing device comprising an interface, a processor, and a memory, wherein the hearing device is configured to enter a pairing mode for pairing to an accessory device; transmit a pairing message to a contralateral hearing device, the pairing message indicative of the hearing device pairing with the accessory device; and pair the hearing device to the accessory device.

## Description

The present disclosure relates to a hearing device, hearing device pairing and related methods of operating a hearing device.

### BACKGROUND

Recent developments within wireless audio streaming from electronic device enable an electronic device to stream wireless audio to hearing devices. However, challenges remain in providing a stable and fail-safe pairing of hearing devices to an accessory device.

### SUMMARY

Accordingly, there is a need for hearing devices and methods with improved pairing procedures.

A hearing device is disclosed, the hearing device, such as a first hearing device, comprising an interface, a processor, and a memory. The (first) hearing device is configured to enter a pairing mode, e.g, for pairing to an accessory device and/or a contralateral hearing device. The (first) hearing device is configured to transmit a pairing message, e.g. to a contralateral hearing device, such as a second hearing device, the pairing message optionally indicative of the hearing device pairing with the accessory device. The (first) hearing device is configured to pair the hearing device to the accessory device.

Further, a hearing device, such as a second hearing device, comprising an interface, a processor, and a memory is disclosed. The (second) hearing device is configured to receive a pairing message from a contralateral hearing device, e.g. a first hearing device. The (second) hearing device is configured to enter a pairing mode for pairing to an accessory device. The (second) hearing device is configured to pair the hearing device to the accessory device.

Also disclosed is a hearing system comprising a first hearing device and a second hearing device. The first hearing device may be a (first) hearing device as disclosed herein and the second hearing device may be a (second) hearing device as disclosed herein.

Also disclosed is a method for operating a hearing device, the method comprising entering a pairing mode for pairing to an accessory device; transmitting a pairing message to a contralateral hearing device, the pairing message optionally indicative of the hearing device pairing with the accessory device; and pairing the hearing device to the accessory device.

It is an important advantage of the hearing device that improved, stable and fail-safe pairing of the hearing device is provided.

Further, a fast and robust pairing of hearing devices to an accessory device, such as a computer, laptop, or other electronic device, such as a smartphone, is provided.

### BRIEF DESCRIPTION OF THE DRAWINGS

The above and other features and advantages of the present invention will become readily apparent to those skilled in the art by the following detailed description of exemplary embodiments thereof with reference to the attached drawings, in which:
Fig. 1 schematically illustrates an exemplary hearing system,
Fig. 2 is an example signalling diagram between devices according to the disclosure,
Fig. 3 is an example signalling diagram between devices according to the disclosure,
Fig. 4 is an example signalling diagram between devices according to the disclosure,
Fig. 5 is an example signalling diagram between devices according to the disclosure, and
Fig. 6 shows a flow chart of an example method.

### DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

A hearing device is disclosed. The hearing device may be configured to be worn at an ear of a user. The hearing device may be a hearable. The hearing device may be a hearing aid, wherein the processor is configured to compensate for a hearing loss of a user.

The hearing device may be of the behind-the-ear (BTE) type, in-the-ear (ITE) type, in-the-canal (ITC) type, receiver-in-canal (RIC) type or receiver-in-the-ear (RITE) type. The hearing aid may be a binaural hearing aid.

The hearing device comprises an interface, a processor, and a memory.

The hearing device/interface may be configured for wireless communication with one or more audio devices also denoted audio sources and one or more hearing devices, such as a contralateral hearing device. The hearing device/interface may be configured for wireless communication with one or more accessory devices, such as a tablet computer, a laptop computer, a smartphone and/or a smart watch. An accessory device may operate, be, and/or function as an audio device. The hearing device/interface optionally comprises an antenna for converting one or more wireless input signals, e.g. a first wireless input signal and/or a second wireless input signal, to antenna output signal(s). The wireless input signal(s) comprises or are representative of audio data, e.g. the first audio data and/or second audio data. In other words, the audio data may be encoded in the wireless input signal(s). The wireless input signal(s) may origin from external audio source(s), such as audio devices, e.g. spouse microphone device(s), wireless TV audio transmitter(s), music player(s), car(s), doorbell(s), mobile phone(s), smart watch(es), and wireless audio transmitters(s), such as public wireless audio transmitter(s), e.g. in airports, train stations, stadiums, cinemas, and/or arenas. The wireless input signal(s) may origin from one or more accessory devices.

The hearing device/interface comprises a radio transceiver coupled to the antenna for converting the antenna output signal to audio data. Wireless signals from different external sources may be multiplexed in the radio transceiver to audio data or provided as separate audio data on separate transceiver output terminals of the radio transceiver. The hearing device may comprise a plurality of antennas and/or an antenna may be configured to be operate in one or a plurality of antenna modes.

The hearing device may comprise a set of microphones. The set of microphones may comprise one or more microphones. The set of microphones comprises a first microphone for provision of a first microphone input signal and/or a second microphone for provision of a second microphone input signal. The set of microphones may comprise N microphones for provision of N microphone signals, wherein N is an integer in the range from 1 to 10. In one or more exemplary hearing devices, the number N of microphones is two, three, four, five or more. The set of microphones may comprise a third microphone for provision of a third microphone input signal.

The hearing device comprises a processor for processing audio data, such as pre-processed transceiver input signal and/or pre-processed microphone input signal(s). The processor provides an electrical output signal based on the input signals/audio data to the processor. Input terminal(s) of the processor are optionally connected to respective output terminals of the pre-processing unit. For example, a transceiver input terminal of the processor may be connected to a transceiver output terminal of the pre-processing unit. One or more microphone input terminals of the processor may be connected to respective one or more microphone output terminals of the pre-processing unit.

In one or more example hearing devices, a hearing device, also denoted first hearing device, comprises an interface, a processor, and a memory, wherein the hearing device is configured to enter a pairing mode for pairing to an accessory device; transmit a pairing message to a contralateral hearing device, the pairing message optionally indicative of the hearing device pairing with the accessory device; and pair the hearing device to the accessory device.

The pairing message may indicate that pairing has been or will be initiated e.g. within a time threshold.

In one or more example hearing devices, the hearing device, such as the first hearing device, is configured to, e.g. upon or after pairing with the accessory device, transmit a pairing instruction to the contralateral hearing device.

In one or more example hearing devices, the hearing device, such as the first hearing device, is a primary hearing device. In one or more example hearing devices, the hearing device, such as the first hearing device, is configured to transmit, e.g. to the contralateral hearing device, the pairing instruction after pairing with the accessory device. Thereby, timely distinct pairing of the hearing device and the contralateral hearing device is provided.

In one or more example hearing devices, the hearing device, such as the first hearing device, is a replica hearing device. In one or more example hearing devices, the hearing device, such as the first hearing device, is configured to receive a pairing instruction after transmitting the pairing message. The hearing device, such as the first hearing device, may be configured to, in response to receipt of the pairing instruction, pair the hearing device, such as the first hearing device, to the accessory device.

In one or more example hearing devices, the hearing device, such as the first hearing device, is configured to determine whether a timeout criterion is satisfied, e..g if a timer exceeds a threshold, and optionally, e.g. in accordance with a determination that the timeout criterion is satisfied, pair the hearing device, such as the first hearing device, to the accessory device.

In one or more example hearing devices, to pair the hearing device, such as the first hearing device, to the accessory device comprises to transmit, e.g. to the accessory device, an advertisement message and/or receive, e.g. from the accessory device, a pairing complete message.

In one or more example hearing devices, a hearing device, also denoted second hearing device, comprises an interface, a processor, and a memory, wherein the hearing device is configured to receive a pairing message from a contralateral hearing device, such as a first hearing device; enter a pairing mode for pairing to an accessory device; and pair the hearing device to the accessory device.

In one or more example hearing devices, the hearing device, such as the second hearing device, is configured to receive a pairing instruction from the contralateral hearing device, such as a first hearing device, and in response to receiving the pairing instruction, pair the hearing device, such as the second hearing device, to the accessory device.

In one or more example hearing devices, the hearing device, such as the second hearing device, is configured to, after pairing with the accessory device, transmit a pairing instruction to the contralateral hearing device, such as the first hearing device.

In one or more example hearing devices, to pair the hearing device, such as the second hearing device, to the accessory device comprises to transmit, e.g. to the accessory device, an advertisement message and receive, e.g. from the accessory device, a pairing complete message.

It is noted that descriptions and features of hearing device functionality, such as hearing device configured to, also apply to methods and vice versa. For example, a description of a hearing device configured to enter a pairing mode for pairing to an accessory device also applies to a method of operating a hearing device, wherein the method comprises entering a pairing mode for pairing to an accessory device, and vice versa. The hearing device disclosed herein may be configured to perform any of the methods herein.

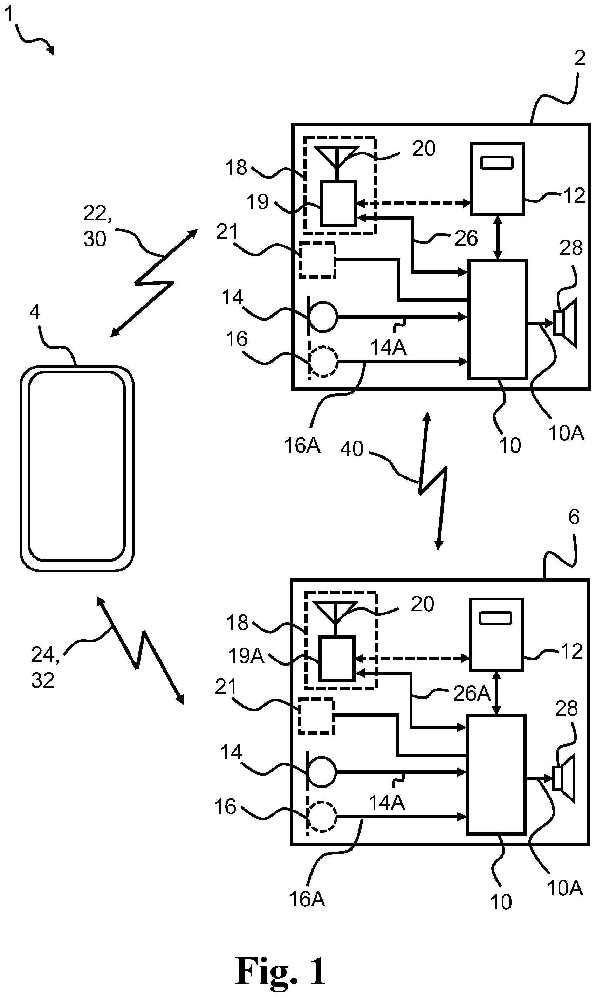

Fig. 1 shows an example hearing system 1 comprising an example hearing device 2 also denoted first hearing device, an accessory device 4, and a hearing device 6 also denoted second hearing device. The accessory device 4 may be a mobile phone as illustrated in Fig. 1, a tablet computer, a laptop computer, or a personal computer.

The hearing devices 2, 6 each comprises an interface, a processor 10 for provision of an electrical output signal 10A, and a memory 12. The hearing devices 2, 6 are optionally hearing aids, where the processor 10 is configured to compensate for a hearing loss of a user.

The interface of each hearing device 2, 6 comprises one or more microphones including a first microphone 14 for provision of a first microphone input signal 14A, and optionally a second microphone 16 for provision of a second microphone input signal 16A. The microphones 14, 16 may be omitted.

The interface of hearing devices 2, 6 comprises a first wireless communication unit 18 being a transceiver 19 and an antenna 20 coupled to the first wireless communication unit 18 and configured for wireless communication, e.g. with one or more accessory devices, such as accessory device 4, and/or a contralateral hearing device. The transceiver 19 is configured to convert wireless input signal(s) including first wireless input signal 22 from accessory device 4 to one or more transceiver input signals 26. The transceiver 19A is configured to convert wireless input signal(s) including second wireless input signal 24 from accessory device 4 to one or more transceiver input signals 26A.

The processor 10 is configured to process one or more input signals 14A, 16A, 26/26A and provide an electrical output signal 10A based on one or more of input signals 14A, 16A, 26/26A.

The interface of each hearing device 2, 6 comprises a receiver 28 for converting the electrical output signal 10A to an audio output or audio output signal.

The hearing device 2 is optionally configured to receive, via the interface, such as transceiver 19, first audio data 30 encoded or embedded in first wireless input signal 22 from accessory device 4.

The hearing device 6 is optionally configured to receive, via the interface, such as transceiver 19A, second audio data 32 encoded or embedded in second wireless input signal 24 from the accessory device 4.

The first hearing device 2 and the second hearing device 6 are configured to communicate via wireless bi-lateral communication 40, e.g. for exchange, via respective interfaces, of one or more control signals or messages between the first hearing device 2 and the second hearing device 6.

The interface of respective hearing devices 2, 6 optionally comprises a button 21 for receiving user input from a user, e.g. a user input for triggering the hearing device to enter a pairing mode.

The hearing device 2 is configured to enter a pairing mode for pairing to an accessory device, e.g. in response to a user input, such as an activation of the button 21; transmit, e.g. upon or after entering the pairing mode, a pairing message to a contralateral hearing device, the pairing message indicative of the hearing device pairing with the accessory device; and pair, e.g. upon or after transmitting the pairing message, the hearing device to the accessory device.

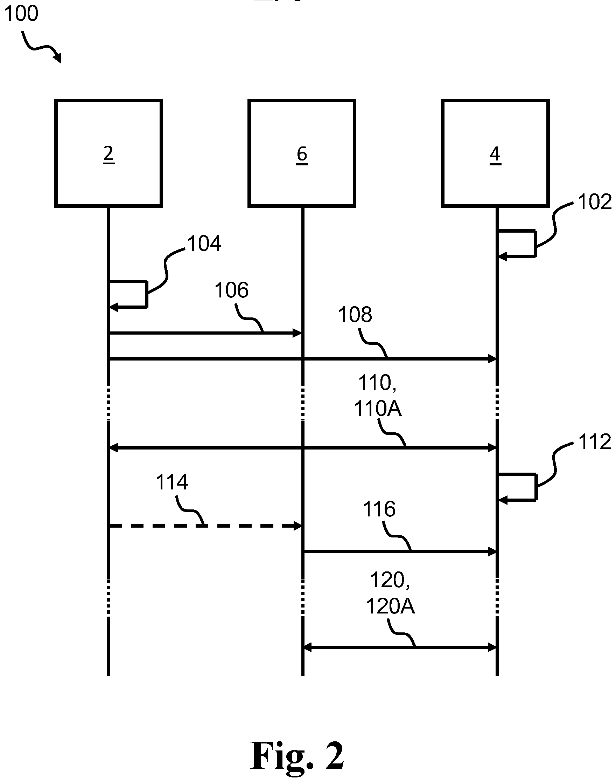

Fig. 2 is a signalling diagram 100 illustrating an example communication between a first hearing device 2, a second hearing device 6 and an accessory device 4. In the scenario illustrated in Fig. 2 the first hearing device 2 enters into pairing mode in first place. The first hearing device 2 may be configured as a primary or master, and the second hearing device 6 may be configured as a replica or slave.

The accessory device 4 is optionally configured to enter a scanning mode in order to scan for hearing devices as illustrated by arrow 102, such as one or more of the first hearing device 2 and the second hearing device 6. In other words, the accessory device 4 may detect hearing devices that are likely to connect, such as hearing devices at an acceptable distance to be detected and/or already paired hearing devices, e.g., hearing devices that once connected to an accessory device are chosen to integrate the respective list of paired hearing devices.

The first hearing device 2 is configured to enter into a pairing mode for pairing to the accessory device 4 as illustrated by arrow 104. The pairing mode may be triggered or activated by user input on button 21 of the first hearing device 2.

The first hearing device 2 transmits, e.g. upon, as part of, or after entering pairing mode, a pairing message 106 to the second hearing device 6 also denoted the contralateral hearing device and/or a replica hearing device. The pairing message 106 from the first hearing device 2 to the second hearing device 6, e.g. via bi-lateral communication 40, may be indicative of the first hearing device 2 initiating a pairing with the accessory device 4 and/or indicative of the second hearing device 6 to prepare for pairing, e.g. by ignoring user input and/or pairing requests. In other words, the first hearing device 2 may instruct, by pairing message 106, the second hearing device 6 to be ready for pairing, e.g. with the accessory device 4, and/or to wait for further messaging related to the pairing of the second hearing device 6 with the accessory device 4. For example, the pairing message 106 can be seen as a "wait for pairing"-instruction. For example, the pairing message 106 can be seen as a pairing request for the second hearing device to pair with an accessory device. Expressed differently, the first hearing device 2 is configured to inform the second hearing device 6 that a pairing has been and/or will be performed between the first hearing device 2 and the accessory device 4 allowing the second hearing device 6 to prepare for a subsequent pairing with the accessory device 4, which in turn may provide a fast and fail-safe pairing of both the first hearing device 2 and the second hearing device 6 to the accessory device 4.

The first hearing device 2 is configured to pair, e.g. upon or after transmitting the pairing message 106, the first hearing device 2 to the accessory device 4, by transmitting a pairing request or an advertisement message 108, such as a pairing advertisement message to the accessory device 4. Further pairing messaging is communicated to finalise the pairing of the first hearing device 2 and the accessory device 4 as illustrated by double-arrow 110. The pairing messaging 110 may comprise a pairing complete message 110A from the accessory device 4 to the first hearing device 2. For example, the pairing complete message can be seen as a message, from the accessory device, confirming the acceptance for pairing the first hearing device. For example, the pairing complete message can be shared by both the first hearing device 2 and the accessory device 4. For example, the pairing complete message 110A can be indicative of a complete pairing sequence comprising a plurality of messages between the first hearing device 2 and the accessory device 4. Stated differently, the accessory device 4 and the first hearing device 2 are paired via pairing messaging 110.

The accessory device 4 may continue in, enter, or return to a scanning mode, e.g. after completion of the pairing with the first hearing device 2, in order at least to scan for the second hearing device as illustrated by arrow 112.

For example, the first hearing device 2 may be intrinsically connected or associated with the second hearing device 6 due to functioning and/or production reasons, such as due to a primary/replica arrangement or configuration of the first hearing device 2 and the second hearing device 6. Stated differently, the second hearing device 6 may be the only hearing device capable of being paired with the accessory device 4 jointly with the first hearing device 2, e.g. in accordance with information exchanged during the pairing messaging 110.

The first hearing device 2 is configured to transmit, e.g. upon or after pairing with the accessory device 4, a pairing instruction 114 to the second hearing device 6, such as the contralateral hearing device.

In one or more examples, the second hearing device 6 is configured to enter into a pairing mode for pairing to the accessory device 4. The second hearing device 6 may be configured to determine whether a pairing criterion is satisfied, e.g. if a pairing instruction 114 has been received, and the second hearing device 6 may be configured to, in accordance with a determination that the pairing criterion is satisfied, e.g. the pairing instruction 114 has been received, enter into pairing mode and/or initiate pairing with the accessory device 4. In other words, the first hearing device 2 may transmit the pairing instruction 114 after pairing with the accessory device 4. The second hearing device 6 may, e.g. in response to the pairing instruction 114, be paired to the accessory device 4. Thereby separated pairing sequences are ensured to improve stable and fail-safe pairing.

The pairing instruction 114 transmitted to the second hearing device may be seen as a message confirming the pairing of the first hearing device 2 to the accessory device 4. Thus, the second hearing device 6 is free to enter into a pairing mode for pairing to the accessory device 4. Stated differently, the second hearing device 6 can prepare for pairing to the accessory device 4 in response to receiving the pairing message 106 and start pairing in response to receiving the pairing instruction 114.

In one or more examples, the second hearing device 6 is configured to pair, e.g. upon or after receiving the pairing instruction 114, the second hearing device 6 to the accessory device 4 by transmitting a pairing request or advertisement message 116, such as a pairing advertisement message to the accessory device 4. Further pairing messaging is communicated to finalise the pairing of the second hearing device 6 and the accessory device 4 as illustrated by double-arrow 120. The pairing messaging 120 may comprise a pairing complete message 120A from the accessory device 4 to the second hearing device 6. For example, the pairing complete message 120A can be seen as a message, from the accessory device, confirming the acceptance for pairing the second hearing device. For example, the pairing complete message 120A can be shared by both the second hearing device 6 and the accessory device 4. For example, the pairing complete message 120A can be indicative of a complete pairing sequence comprising a plurality of messages between the second hearing device 6 and the accessory device 4. Stated differently, the accessory device 4 and the second hearing device 6 are paired via pairing messaging 120.

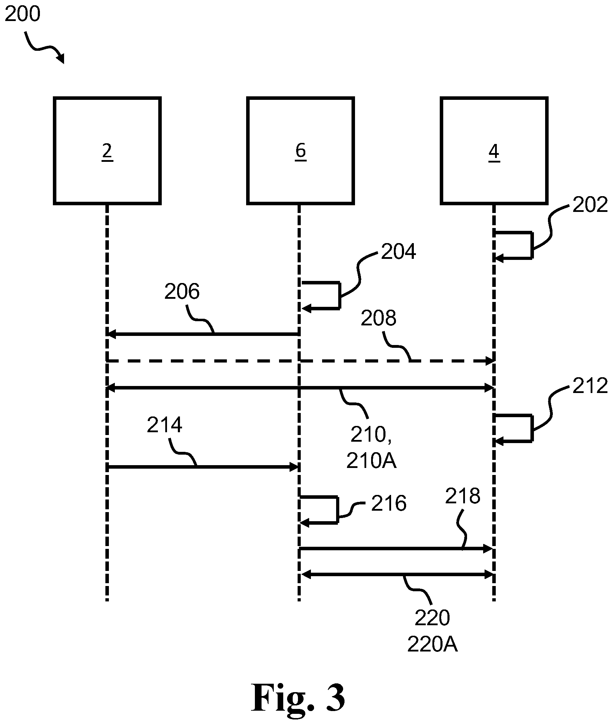

Fig. 3 is a signalling diagram 200 illustrating an example communication between a first hearing device 2, a second hearing device 6 and an accessory device 4. In the scenario illustrated in Fig. 3 the second hearing device 6 enters into pairing mode in first place. The first hearing device 2 may be configured as a primary or master, and the second hearing device 6 may be configured as a replica or slave. At a final stage of pairing process, the second hearing device 6 may become the primary or a master, whereas the first hearing device 2 may become the replica or slave.

For example, although the replica hearing device enters into paring in first place, the primary hearing device is the hearing device paring in first place to the accessory device, thus dominating the pairing of the replica hearing device. In other words, after pairing the primary hearing device to the accessory device, the replica hearing device is allowed to start pairing to the accessory device. For example, the replica hearing device receives a pairing message from the primary hearing device to start pairing. The pairing message may be a message confirming the pairing of the primary hearing device to the accessory device.

The accessory device 4 is optionally configured to enter a scanning mode in order to scan for hearing devices as illustrated by arrow 202, such as one or more of the first hearing device 2 and the second hearing device 6. In other words, the accessory device 4 may detect hearing devices that are likely to connect, such as hearing devices at an acceptable distance to be detected and/or already paired hearing devices, e.g., hearing devices that once connected to an accessory device are chosen to integrate the respective list of paired hearing devices.

The second hearing device 6 is configured to enter into a pairing mode for pairing to the accessory device 4 as illustrated by arrow 204. The pairing mode may be triggered or activated by user input botton 21 of the second hearing device 6.

For example, since the replica hearing device is not the primary hearing device, the replica hearing device is not allowed to directly pair with the accessory device. For example, the primary hearing device may allow the replica hearing device to become the new primary hearing device, with the primary hearing device becoming the new replica device. Stated differently, a primary hearing device can be seen as a means to have a replica hearing device paired to a accessory device.

The second hearing device 6, e.g. upon, as part of, or after entering pairing mode, transmits a pairing message 206 to the first hearing device 2 also denoted the contralateral hearing device and/or a primary hearing device. The pairing message 206 from the second hearing device 6 to the first hearing device 2, e.g. via bi-lateral communication 40, may be indicative of the second hearing device 6 requesting for pairing the accessory device 4 and/or indicative of the first hearing device 2 to initiate a pairing with the accessory device 4. In other words, the second hearing device 6 may trigger, by pairing message 206, the first hearing device 2, which may be a primary hearing device, to enter into pairing mode, e.g. with the accessory device 4. The pairing message 206 may be indicative of an intention of the second hearing device 6 for pairing with the accessory device 4. For example, the pairing message 206 can be seen as a pairing request for a second hearing device to pair with an accessory device via a first hearing device.

It may be appreciated that entering into paring mode does not imply pairing a hearing device to an accessory device. Entering into pairing mode can be seen as an intention or availability for pairing. For example, when the replica hearing device, such as second hearing device 6, enters into pairing mode, the primary hearing device, such as first hearing device 2, is paired to the accessory device 4 in first place to allow the replica hearing device to be paired to the accessory device and/or to become the new primary hearing device. In one or more examples, the second hearing device may become the primary hearing device when the second hearing device determines that a timeout criterion is satisfied, e.g. if a timer exceeds a threshold.

In response to the request from the second hearing device 6 for pairing to the accessory device 4, e.g. upon or after receiving the pairing message 206, the first hearing device 2 is configured to pair to the accessory device 4, by transmitting a pairing request or an advertisement message 208, such as a pairing advertisement message to the accessory device 4. Further pairing messaging is communicated to finalise the pairing of the first hearing device 2 and the accessory device 4 as illustrated by double-arrow 210. The pairing messaging 210 may comprise a pairing complete message 210A from the accessory device 4 to the first hearing device 2. For example, the pairing complete message can be seen as a message, from the accessory device, confirming the acceptance for pairing the first hearing device. For example, the pairing complete message can be shared by both the first hearing device 2 and the accessory device 4. For example, the pairing complete message 210A can be indicative of a complete pairing sequence comprising a plurality of messages between the first hearing device 2 and the accessory device 4. Stated differently, the accessory device 4 and the first hearing device 2 are paired via pairing messaging 210.

The accessory device 4 may continue in, enter, or return to a scanning mode, e.g. after completion of the pairing with the first hearing device 2, in order at least to scan for the second hearing device as illustrated by arrow 212.

For example, the first hearing device 2 may be intrinsicly connected with the second hearing device 6 due to functioning and/or production reasons, such as due to a primary/replica arrangement or configuration of the first hearing device 2 and the second hearing device 6. Stated differently, the second hearing device 6 may be the only hearing device capable of being paired with the accessory device 4 jointly with the first hearing device 2, e.g. in accordance with information exchanged during the pairing messaging 210.

The second hearing device 6 is configured to transmit, e.g. upon or after pairing with the accessory device 4, a pairing instruction 214 to the second hearing device 6, such as the contralateral hearing device.

In one or more examples, the second hearing device 6 is configured to enter into a pairing mode for pairing to the accessory device 4. The second hearing device 6 may be configured to determine whether a pairing criterion is satisfied, e.g. if a pairing instruction 214 has been received, and the second hearing device 6 may be configured to, in accordance with a determination that the pairing criterion is satisfied, e.g. the pairing instruction 214 has been received, enter into pairing mode and/or initiate pairing with the accessory device 4. In other words, the first hearing device 2 may transmit the pairing instruction 214 after pairing with the accessory device 4. The second hearing device 6 may, e.g. in response to the pairing instruction 214, be paired to the accessory device 4. Thereby separated pairing sequences are ensured to improve stable and fail-safe pairing.

The pairing instruction 214 transmitted to the second hearing device 6 may be seen as a message confirming the pairing of the first hearing device 2 to the accessory device 4. Thus, the second hearing device 6 is free to enter into a pairing mode for pairing to the accessory device 4. Stated differently, the second hearing device 6 can start pairing to the accessory device 4 in response to receiving the pairing instruction 214.

The second hearing device 6, such as the replica hearing device, may be configured to wait for the pairing of the first hearing device 2 with the accessory device 4, as illustrated by arrow 216, with the waiting time being limited by a timeout criterion. In one or more examples, the timeout criterion can be seen as a timing/time based threshold. In accordance with a determination that the timeout criterion is satisfied, the second hearing device 6, such as the replica hearing device, is allowed to pair, such as by receiving the pairing instruction 214, with the accessory device 4. In accordance with a determination that the timeout criterion is not satisfied, the second hearing device 6 may become a primary hearing device and start pairing without any allowance from the first hearing device, such as without receiving the pairing instruction 214, with the accessory device 4. In other words, the determination that the timeout criterion is not satisfied is perceived by the second hearing device 6, such as the replica hearing device in the beginning of the pairing process, as an inability of the first hearing device 2, such as the primary hearing device in the beginning of the pairing process, of pairing the accessory device 4 within the time interval stipulated by the timeout criterion. Stated differently, the first hearing device 2 may not be able to pair the accessory device 4 in first place, which makes the second hearing device 6 starting the pairing process to the accessory device 4.

In one or more examples, whether the timeout criterion is satisfied, e.g., the second hearing device 6 is kept as the replica, with the first hearing device 2 already paired to the accessory device 4, or not satisfied, e.g., the second hearing device 6 becomes the primary and pairs the accessory device 4 in first place, the second hearing device 6 is configured to pair to the accessory device 4 by transmitting a pairing request or advertisement message 218, such as a pairing advertisement message to the accessory device 4. Further pairing messaging is communicated to finalise the pairing of the second hearing device 6 and the accessory device 4 as illustrated by double-arrow 220. The pairing messaging 220 may comprise a pairing complete message 220A from the accessory device 4 to the second hearing device 6. For example, the pairing complete message 220A can be seen as a message, from the accessory device, confirming the acceptance for pairing the second hearing device. For example, the pairing complete message 220A can be shared by both the second hearing device 6 and the accessory device 4. For example, the pairing complete message 220A can be indicative of a complete pairing sequence comprising a plurality of messages between the second hearing device 6 and the accessory device 4. Stated differently, the accessory device 4 and the second hearing device 6 are paired via pairing messaging 220.

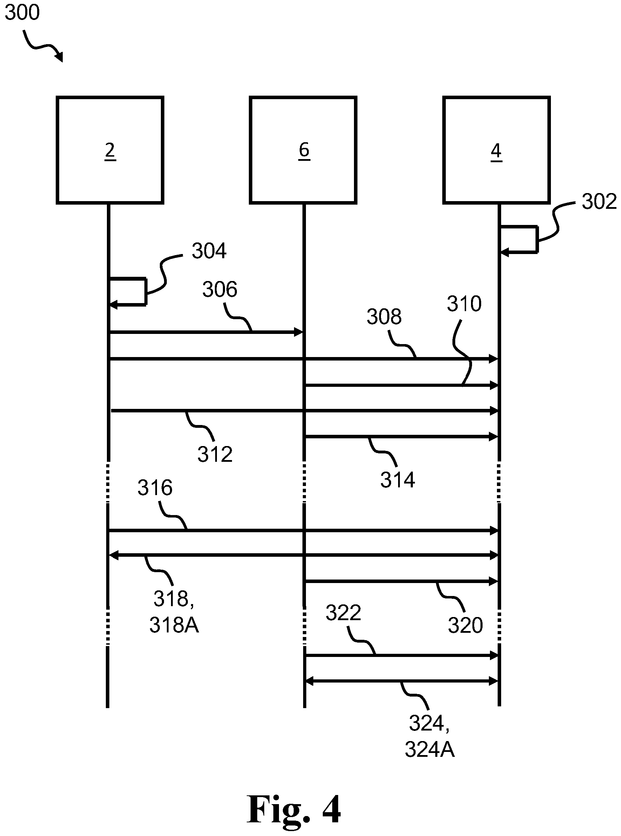

Fig. 4 is a signalling diagram 300 illustrating an example communication between a first hearing device 2, a second hearing device 6 and an accessory device 4. In the scenario illustrated in Fig. 4 the first hearing device 2 (e.g., the primary hearing device) and the second hearing device 6 (e.g., the replica hearing device) are concurrently paired with the accessory device 4, in which the first hearing device 2 pairs the accessory device 4 in first place. In other words, the accessory device 4 is optionally configured to enter a scanning mode in order to scan for both the first hearing device 2 and the second hearing device 6, with the first hearing device 2 pairing the accessory device 4 in first place, however with the second hearing device 6 being already perceived to likely entering into paring mode by the accessory device 4, such as due to a primary/replica arrangement or configuration of the first hearing device 2 and the second hearing device 6. In Figs. 2-3, the accessory device 4 is optionally configured to enter a scanning mode in order to scan for the first hearing device 2 and the second hearing device 6 at different time instants.

The accessory device 4 is optionally configured to enter a scanning mode in order to scan for hearing devices as illustrated by arrows 302, such as one or more of the first hearing device 2 and the second hearing device 6. In other words, the accessory device 4 may detect hearing devices that are likely to connect, such as hearing devices at an acceptable distance to be detected and/or already paired hearing devices (e.g., hearing devices that once connected to an accessory device are chosen to integrate the respective list of paired hearing devices).

In one or more examples, the first hearing device 2 and the second hearing device 6 are concurrently paired with the accessory device 4. In one or more examples, the first hearing device 2 does not have to give permission for the second hearing device 6 to enter into pairing mode by sending a paring instruction, such as the paring instruction 114 of Fig. 2 and the paring instruction 214 of Fig. 3, to the second hearing device 6, after having the first hearing device 2 paired with the accessory device 4. In one or more examples, both the first hearing device 2 and the second hearing device 6 are scanned by the accessory device 4 at a same time instant.

For example, the first hearing device 2 may be intrinsicly connected or associated with the second hearing device 6 due to functioning and/or production reasons, such as due to a primary/replica arrangement or configuration of the first hearing device 2 and the second hearing device 6. Stated differently, the second hearing device 6 may be the only hearing device capable of being paired with the accessory device 4 jointly with the first hearing device 2. For example, the accessory device 4 may straightly/rapidly pair the second hearing device 6, once the first hearing device 2 is paired to the accessory device 4.

The first hearing device 2 is configured to enter into a pairing mode for pairing to the accessory device 4 as illustrated by arrow 304. The pairing mode may be triggered or activated by user input on button 21 of the first hearing device 2.

The first hearing device 2 may transmits, e.g. upon, as part of, or after entering pairing mode, a pairing message 306 to the second hearing device 6 also denoted the contralateral hearing device and/or a replica hearing device. The pairing message 306 from the first hearing device 2 to the second hearing device 6, e.g. via bi-lateral communication 40, may be indicative of the first hearing device 2 initiating a pairing with the accessory device 4 and/or indicative of the second hearing device 6 to prepare for pairing, e.g. by ignoring user input and/or pairing requests. In other words, the first hearing device 2 may instruct, by pairing message 306, the second hearing device 6 to be ready for pairing, e.g. with the accessory device 4.

For example, the pairing message 306 can be seen as a pairing request for the second hearing device to pair with an accessory device. Expressed differently, the first hearing device 2 is configured to inform the second hearing device 6 that a pairing has been and/or will be performed between the first hearing device 2 and the accessory device allowing the second hearing device 6 to prepare for a subsequent pairing with the accessory device 4, which in turn may provide a fast and fail-safe pairing of both the first hearing device 2 and the second hearing device 6 to the accessory device 4.

The first hearing device 2 is configured to pair, e.g. upon or after transmitting the pairing message 306, the first hearing device 2 to the accessory device 4, by transmitting a pairing request or an advertisement message 308, such as a pairing advertisement message to the accessory device 4. In other words, the accessory device 4 receives the intention for pairing from the first hearing device 2.

The second hearing device 6 is configured to pair, e.g. upon or after receiving the pairing message 306 and once the first hearing device 2 is paired to the accessory device 4, the second hearing device 6 to the accessory device 4, by transmitting a pairing request or an advertisement message 310, such as a pairing advertisement message to the accessory device 4. In other words, the accessory device 4 receives the intention for pairing the second hearing device 6.

In one or more examples, the first hearing device 2 and the second hearing device 6 are continuously sending pairing requests or advertisement messages, such as the pairing requests or advertisement messages 308, 312, 316 associated with the first hearing device 2 and the pairing requests or advertisement messages 310, 314 for the second hearing device 6. In one or more examples, the pairing requests or advertisement messages associated with the first hearing device 2 and the second hearing device 6 are sent to the accessory device 4 in an alternate manner, e.g. until the accessory device 4 accepts pairing one of the hearing devices.

In one or more examples, the accessory device 4 accepts pairing the primary hearing device, such as the first hearing device 2. For example, the accessory device 4 is aware that the first hearing device 2 is the primary hearing device. Stated differently, the accessory device 4 may pair the first hearing device 2 in first place.

Futher pairing messaging is communicated to finalise the pairing of the first hearing device 2 and the accessory device 4 as illustrated by double-arrow 318. The pairing messaging 318 may comprise a pairing complete message 318A from the accessory device 4 to the first hearing device 2. For example, the pairing complete message can be seen as a message, from the accessory device, confirming the acceptance for pairing the first hearing device. For example, the pairing complete message can be shared by both the first hearing device 2 and the accessory device 4. For example, the pairing complete message 318A can be indicative of a complete pairing sequence comprising a plurality of messages between the first hearing device 2 and the accessory device 4. Stated differently, the accessory device 4 and the first hearing device 2 are paired via pairing messaging 318.

In one or more examples, the second hearing device is configured to initiate pairing with accessory device 4 once the accessory device 4 accepts pairing the first hearing device 2, by continuously sending pairing requests or advertisement messages, such as the advertisement messages 320, 322, to the accessory device 4. In other words, the accessory device 4 receives continuously the intention from the second hearing device 6 to pair to the accessory device 4. The accessory device 4 may decline the request for pairing from the second hearing device 6, such as the replica hearing device, until the accessory device 4 accepts pairing the first hearing device 2, such as the primary hearing device. Declining the request for pairing from the second hearing device 6 can be seen as not obtaining any response from the accessory device 4, such as not receiving any pairing complete message from the accessory device 4.

In one or more examples, the second hearing device 6 is configured to pair, e.g. upon or after the accessory device 4 accepts pairing the first hearing device 2 (e.g. without receiving a pairing instruction), the second hearing device 6 to the accessory device 4 by transmitting the pairing request or advertisement message 322, such as a pairing advertisement message to the accessory device 4.

Futher pairing message is communicated to finalise the pairing of the second hearing device 6 and the accessory device 4 as illustrated bt double-arrow 324. The pairing messaging 324 may comprise a pairing complete message 324A from the accessory device 4 to the second hearing device 6. For example, the pairing complete message can be seen as a message, from the accessory device, confirming the acceptance for pairing the second hearing device. For example, the pairing complete message can be shared by both the second hearing device 6 and the accessory device 4. For example, the pairing complete message 324A can be indicative of a complete pairing sequence comprising a plurality of messages between the second hearing device 6 and the accessory device 4. Stated differently, the accessory device 4 and the second hearing device 6 are paired via pairing messaging 324.

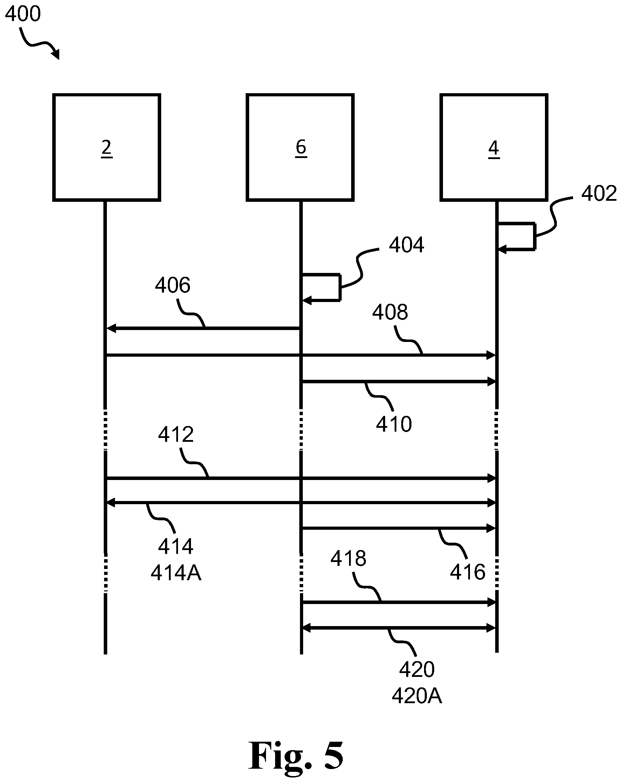

Fig. 5 is a signalling diagram 400 illustrating an example communication between a first hearing device 2, a second hearing device 6 and an accessory device 4. In the scenario illustrated in Fig. 5 the first hearing device 2 (e.g., the primary hearing device) and the second hearing device 6 (e.g., the replica hearing device) are concurrently paired with the accessory device 4, in which the second hearing device 6 enters into pairing in first place.

In one or more example methods, the replica hearing device is the hearing device entering into paring in first place. Entering into pairing in first place may not imply pairing to the accessory in first place. For example, although the replica hearing device enters into paring in first place, the primary hearing device is the hearing device paring in first place to the accessory device, thus dominating the pairing of the replica hearing device. In other words, after pairing the primary hearing device to the accessory device, the replica hearing device can pair to the accessory device.

The accessory device 4 is optionally configured to enter a scanning mode in order to scan for both the first hearing device 2 and the second hearing device 6, with the first hearing device 2 pairing the accessory device 4 in first place, however with the second hearing device 6 being already perceived to likely entering into paring mode by the accessory device 4, such as due to a primary/replica arrangement or configuration of the first hearing device 2 and the second hearing device 6. In Figs. 2-3, the accessory device 4 is optionally configured to enter a scanning mode in order to scan for the first hearing device 2 and the second hearing device 6 at different time instants.

In one or more examples, although the second hearing device 6, such as the replica hearing device, enters into paring in first place, the first hearing device 2, such as the primary hearing device, is the hearing device paring in first place to the accessory device.

The accessory device 4 is optionally configured to enter a scanning mode in order to scan for hearing devices as illustrated by arrow 402, such as one or more of the first hearing device 2 and the second hearing device 6. In other words, the accessory device 4 may detect hearing devices that are likely to connect, such as hearing devices at an acceptable distance to be detected and/or already paired hearing devices (e.g., hearing devices that once connected to an accessory device are chosen to integrate the respective list of paired hearing devices).

In one or more examples, the first hearing device 2 may be intrinsicly connected with the second hearing device 6 due to functioning and/or production reasons, such as due to a primary/replica arrangement or configuration of the first hearing device 2 and the second hearing device 6. Stated differently, the second hearing device 6 may be the only hearing device capable of being paired with the accessory device 4 jointly with the first hearing device 2. For example, the accessory device 4 may straightly pair the second hearing device 6, once the first hearing device 2 is paired to the accessory device 4. The first hearing device 2 may receive a pairing message (e.g., similar to pairing message 206 of Fig. 3) for triggering the first hearing device 2 to enter into pairing mode, e.g. with the accessory device 4.

The second hearing device 6 is configured to enter into a pairing mode for pairing to the accessory device 4 as illustrated by arrow 404. The pairing mode may be triggered or activated by user input on button 21 of the second hearing device 6.

The second hearing device 6 can be seen as the replica hearing device. For example, since the replica hearing device is not the primary hearing device, the replica hearing device is not allowed to directly pair with the accessory device. Stated differently, a primary hearing device can be seen as a means to have a replica hearing device paired to a accessory device.

The second hearing device 6, such as the replica hearing device, may transmits, e.g. upon, as part of, or after entering pairing mode, a pairing message 406 (similar to pairing message 206 in Fig. 3) to the first hearing device 2 also denoted the contralateral hearing device and/or a primary hearing device. The pairing message 406 from the second hearing device 6 to the first hearing device 2, e.g. via bi-lateral communication 40, may be indicative of the second hearing device 6 requesting for pairing the accessory device 4 and/or indicative of the first hearing device 2 to initiate a pairing with the accessory device 4. In other words, the second hearing device 6 may trigger, by pairing message 406, the first hearing device 2 to enter into pairing mode, e.g. with the accessory device 4. The pairing message 406 may be indicative of an intention of the second hearing device 6 for pairing with the accessory device 4. For example, the pairing message 406 can be seen as a pairing request for a second hearing device to pair with an accessory device via a first hearing device.

It may be appreciated that entering into a paring mode does not imply pairing a hearing device to an accessory device. Entering into pairing mode can be seen as an intention or availability for pairing. For example, when the replica hearing device, such as the second hearing device 6, enters into pairing mode, the primary hearing device, such as the first hearing device 2, is paired to the accessory device 4 in first place to allow the replica hearing device to be paired to the accessory device.

In response to the request from the second hearing device 6 for pairing to the accessory device 4, e.g. upon or after receiving the pairing message 406, the first hearing device 2 is configured to pair to the accessory device 4, by transmitting a pairing request or an advertisement message 408, such as a pairing advertisement message to the accessory device 4. In other words, the accessory device 4 receives the intention for pairing from the first hearing device 2.

The second hearing device 6 is configured to pair, e.g. upon or after the first hearing device 2 (such as the primary hearing device) is paired to the accessory device 4, the second hearing device 6 to the accessory device 4 by transmitting a pairing request or an advertisement message 410, such as a pairing advertisement message to the accessory device 4. In other words, the accessory device 4 receives the intention for pairing the first hearing device 2. In other words, the accessory device 4 receives the intention for pairing the second hearing device 6.

In one or more examples, the first hearing device 2 and the second hearing device 6 are continuously sending pairing requests or advertisement messages, such as the pairing requests or advertisement messages 408, 412 associated with the first hearing device 2 and the advertisement message 410 from one or a plurality of advertisement messages associated with the second hearing device 6. In one or more examples, the pairing requests or advertisement messages associated with the first hearing device 2 and the second hearing device 6 are sent to the accessory device 4 in an alternate manner, until the accessory device 4 accepts pairing one of the hearing devices, such as the first hearing device 2 and the second hearing device 6.

In one or more examples, the accessory device 4 accepts pairing the primary hearing device, such as the first hearing device 2. For example, the accessory device 4 is aware that the first hearing device 2 is the primary hearing device. Stated differently, the accessory device 4 may pair the first hearing device in first place.

Futher pairing messaging is communicated to finalise the pairing of the first hearing device 2 and the accessory device 4 as illustrated by double-arrow 414. The pairing messaging 414 may comprise a pairing complete message 414A from the accessory device 4 to the first hearing device 2. For example, the pairing complete message can be seen as a message, from the accessory device, confirming the acceptance for pairing the first hearing device. For example, the pairing complete message can be shared by both the first hearing device 2 and the accessory device 4. For example, the pairing complete message 414A can be indicative of a complete pairing sequence comprising a plurality of messages between the first hearing device 2 and the accessory device 4. Stated differently, the accessory device 4 and the first hearing device 2 are paired via pairing messaging 414.

In one or more examples, the second hearing device is configured to initiate pairing with accessory device 4 once the accessory device 4 accepts pairing the first hearing device 2, by continuously sending pairing requests or advertisement messages 416, 418, to the accessory device 4. In other words, the accessory device 4 receives continuously the intention from the second hearing device 6 to pair to the accessory device 4. The accessory device 4 may decline the request for pairing from the second hearing device 6, such as the replica hearing device, until the accessory device 4 accepts pairing the first hearing device 2, such as the primary hearing device. Declining the request for pairing from the second hearing device 6 can be seen as not obtaining any response from the accessory device 4, such as not receiving any pairing complete message from the accessory device 4.

In one or more examples, the second hearing device 6 is configured to pair, e.g. upon or after the accessory device 4 accepts pairing the first hearing device 2 (e.g. without receiving a pairing instruction), the second hearing device 6 to the accessory device 4 by transmitting the pairing request or advertisement message 418, such as a pairing advertisement message to the accessory device 4.

Futher pairing message is communicated to finalise the pairing of the second hearing device 6 and the accessory device 4 as illustrated bt double-arrow 420. The pairing messaging 420 may comprise a pairing complete message 420A from the accessory device 4 to the second hearing device 6. For example, the pairing complete message can be seen as a message, from the accessory device, confirming the acceptance for pairing the second hearing device. For example, the pairing complete message can be shared by both the second hearing device 6 and the accessory device 4. For example, the pairing complete message 420A can be indicative of a complete pairing sequence comprising a plurality of messages between the second hearing device 6 and the accessory device 4. Stated differently, the accessory device 4 and the second hearing device 6 are paired via pairing messaging 420.

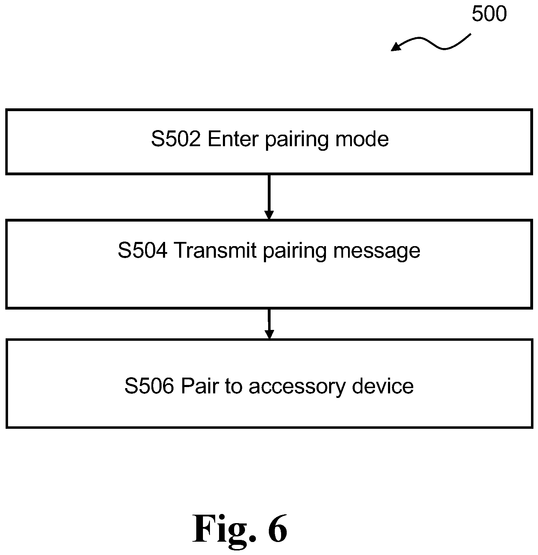

Fig. 6 shows a flow chart of an example method for operating a hearing device. The method 500 comprises entering S502 a pairing mode for pairing to an accessory device; transmitting S504 a pairing message to a contralateral hearing device, the pairing message indicative of the hearing device pairing with the accessory device; and pairing S506 the hearing device to the accessory device.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Furthermore, the labelling of a first element does not imply the presence of a second element and vice versa.

It may be appreciated that Figs. 1-6 comprise some modules or operations which are illustrated with a solid line and some modules or operations which are illustrated with a dashed line. The modules or operations which are comprised in a solid line are modules or operations which are comprised in a broad example embodiment. The modules or operations which are comprised in a dashed line are example embodiments which may be comprised in, or a part of, or are further modules or operations which may be taken in addition to the modules or operations of the solid line example embodiments. It should be appreciated that these operations need not be performed in order presented. Furthermore, it should be appreciated that not all of the operations need to be performed. The exemplary operations may be performed in any order and in any combination.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims, that the exemplary embodiments may be implemented at least in part by means of both hardware and software, and that several "means", "units" or "devices" may be represented by the same item of hardware.

The various exemplary methods, devices, and systems described herein are described in the general context of method steps processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform specified tasks or implement specific abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly to be regarded in an illustrative rather than restrictive sense. The claimed invention is intended to cover all alternatives, modifications, and equivalents.

### LIST OF REFERENCES

- 1: hearing system
- 2: hearing device, first hearing device
- 4: accessory device
- 6: hearing device, second hearing device
- 10: processor/processing unit
- 10A: electrical output signal
- 12: memory
- 14: first microphone
- 14A: first microphone input signal
- 16: second microphone
- 16A: second microphone input signal
- 18: wireless communication unit
- 19: transceiver
- 19A: transceiver
- 20: antenna
- 21: button for receiving user input from a user
- 22: first wireless input signal
- 24: second wireless input signal
- 26: transceiver input signals
- 26A: transceiver input signals
- 28: receiver
- 30: first audio data
- 32: second audio data
- 40: bi-lateral communication
- 100: signalling diagram
- 102: enter scan mode
- 104: enter pairing mode
- 106: pairing message
- 108: advertisement message
- 110: pairing messaging
- 110A: pairing complete message
- 112: enter scan mode
- 114: pairing instruction
- 116: advertisement message
- 120: pairing messaging
- 120A: pairing complete message
- 200: signalling diagram
- 202: enter scan mode
- 204: enter pairing mode
- 206: pairing message
- 208: advertisement message
- 210: pairing messaging
- 210A: pairing complete message
- 212: enter scan mode
- 214: pairing instruction
- 216: wait for primary pairing mode with timeout
- 218: advertisement message
- 220: pairing messaging
- 220A: pairing complete message
- 300: signalling diagram
- 302: enter scan mode
- 304: enter pairing mode
- 306: pairing message
- 308: advertisement message
- 310: advertisement message
- 312: advertisement message
- 314: advertisement message
- 316: advertisement message
- 318: pairing messaging
- 318A: pairing complete message
- 320: advertisement message
- 322: advertisement message
- 324: pairing messaging
- 324A: pairing complete message
- 400: signalling diagram
- 402: enter scan mode
- 404: enter pairing mode
- 406: pairing message
- 408: advertisement message
- 410: advertisement message
- 412: advertisement message
- 414: pairing messaging
- 414A: pairing complete message
- 416: advertisement message
- 418: advertisement message
- 420: pairing messaging
- 420A: pairing complete message
- 500: method for operating a hearing device
- S502: entering a pairing mode for pairing to an accessory device
- S504: transmitting a pairing message to a contralateral hearing device
- S506: pairing the hearing device to the accessory device

## Claims

1. A hearing device comprising an interface, a processor, and a memory, wherein the hearing device is configured to:
enter a pairing mode for pairing to an accessory device;
transmit a pairing message to a contralateral hearing device, the pairing message indicative of the hearing device pairing with the accessory device; and
pair the hearing device to the accessory device.

2. Hearing device according to claim 1, wherein the hearing device is configured to transmit a pairing instruction to the contralateral hearing device.

3. Hearing device according to claim 2, wherein the hearing device is a primary hearing device and configured to transmit the pairing instruction after pairing with the accessory device.

4. Hearing device according to claim 1, wherein the hearing device is a replica hearing device and configured to receive a pairing instruction after transmitting the pairing message and, in response to receipt of the pairing instruction pair the hearing device to the accessory device.

5. Hearing device according to claim 4, wherein the hearing device is configured to determine whether a timeout criterion is satisfied, and, in accordance with a determination that the timeout criterion is satisfied, pair the hearing device to the accessory device.

6. Hearing device according to any one of claims 1-5, wherein to pair the hearing device to the accessory device comprises to transmit an advertisement message and receive a pairing complete message.

7. A hearing device comprising an interface, a processor, and a memory, wherein the hearing device is configured to:
receive a pairing message from a contralateral hearing device;
enter a pairing mode for pairing to an accessory device; and
pair the hearing device to the accessory device.

8. Hearing device according to claim 7, wherein the hearing device is configured to receive a pairing instruction from the contralateral hearing device and in response to receiving the pairing instruction, pair the hearing device to the accessory device

9. Hearing device according to claim 7, wherein the hearing device is configured to, after pairing with the accessory device, transmit a pairing instruction to the contralateral hearing device.

10. Hearing device according to any one of claims 7-9, wherein to pair the hearing device to the accessory device comprises to transmit an advertisement message and receive a pairing complete message.

11. Hearing system comprising a first hearing device and a second hearing device, wherein the first hearing device is a hearing device according to any of claims 1-6 and the second hearing device is a hearing device according to any of claims 7-10.

12. A method for operating a hearing device, the method comprising:
entering a pairing mode for pairing to an accessory device;
transmitting a pairing message to a contralateral hearing device, the pairing message indicative of the hearing device pairing with the accessory device; and
pairing the hearing device to the accessory device.
